# EUROPEAN PATENT SPECIFICATION

(11) **EP 3 572 657 B1**
(45) Date of publication and mention of the grant of the patent: **09.06.2021**
(21) Application number: 19174720.3
(22) Date of filing: 15.05.2019
(51) Int. Cl.: F02D 41/04, F02D 43/00, F02D 11/10, F02D 21/08, F02D 41/00, F02N 11/08

(54) **METHOD OF OPERATING AN INTERNAL COMBUSTION ENGINE**
VERFAHREN ZUM BETRIEB EINES VERBRENNUNGSMOTORS
PROCÉDÉ DE FONCTIONNEMENT D'UN MOTEUR À COMBUSTION INTERNE

(30) Priority: 24.05.2018 GB 201808525
(43) Date of publication of application: 27.11.2019
(73) Proprietor: Ford Global Technologies, LLC, Dearborn, MI 48126-2738 (US)
(72) Inventor: HESKETH, David, Ingatestone, Essex CM4 9LN (GB); OAKLEY, Aaron John, Great Baddow, Essex CM2 7QT (GB)
(74) Representative: Haseltine Lake Kempner LLP

(56) References cited:
- EP-A1- 2 863 035
- WO-A1-2008/152483
- WO-A1-2011/133154
- JP-A- H0 861 157
- JP-A- 2015 121 156
- US-A1- 2011 077 840

## Description

### Technical Field

The present disclosure relates to a method of operating an internal combustion engine and is particularly, although not exclusively, concerned with a method of operating an internal combustion engine in order to reduce corrosion of a fuel injector nozzle.

### Background

Modern motor vehicles often comprise a start-stop system configured to shut down an engine of the motor vehicle when the engine is not required to drive the vehicle, e.g. when the vehicle is stationary at traffic signals. Stopping the engine in this way reduces fuel consumption of the engine and the production of polluting gases, by reducing the amount of time that the engine spends idling.

Because the engine is potentially stopped and started multiple times during a single journey, it is desirable for the Noise, Vibration and Harshness (NVH) attributes of the engine during a stop event to be excellent, so that the driver experiences minimal vibrations or shaking of the vehicle when the engine stops.

In order to minimise undesirable shaking of the engine during an engine stop, vehicles often implement a "soft-stop" strategy by which the forces generated by the movement of the engine pistons are reduced. A previously proposed soft-stop strategy comprises sealing the intake manifold of the engine using a throttle and continuing to supply fuel to the engine so that the engine continues to run, until there is insufficient air being drawn into the cylinders to support combustion and the engine stalls.

Shutting the engine down in this way reduces the pressure of air within the intake manifold, so that the pressure of the inlet air being drawn into the cylinders is reduced. This in turn reduces the magnitude of forces on the pistons of the engine, reducing vibrations of the engine.

The combustion events occurring shortly before the engine stalls can leave combustion products within the cylinders that are not expelled from the cylinders after the engine has stopped. Furthermore, because of the pressure differential across the engine, e.g. between the inlet and exhaust manifolds, exhaust gases can be drawn back into the cylinders from the exhaust manifold when the engine stops.

JP 2015 121156 A discloses a method for shutting down a Diesel engine comprising a highpressure exhaust gas recirculation system.

### Statements of Invention

According to an aspect of the present disclosure, there is provided a method of operating an engine assembly, the method comprising:
determining that the engine should be shut down;
determining a likelihood of the formation of condensation within cylinders of the engine assembly after the engine has been shut down, e.g. if exhaust gases are present within an engine cylinder after the engine has been shut down;
selecting an engine shut down procedure based on the likelihood of condensation, wherein if it is determined that the likelihood of condensation is above a first threshold value, the selected engine shut down procedure comprises:
   a) closing a valve of an exhaust gas recirculation system;
   b) maintaining an inlet throttle of the engine assembly in an open position for a period of time;
   c) cutting the supply of fuel to the engine following the period of time, e.g. whilst the inlet throttle is in the open position, and
if it is determined that the likelihood of condensation is below a second threshold value, the engine shut down procedure is selected in order to minimise vibrations of the engine during the engine shut down; and
performing the engine shut down procedure to shut down the engine.

The steps of the method may be performed in order.

The supply of fuel to the engine may be cut, in step c), without ramping down gradually. The period of time may be greater than or equal to 500ms and less than or equal to 1000ms. For example the period of time may be 700ms. The period may be determined based on a position of the EGR valve prior to the EGR valve being closed in step a). Alternatively, the period of time may be a predetermined period, e.g. set during manufacture of the engine assembly.

The throttle may be maintained in the open position during and after step c) until the engine as stopped. In other words, the engine may be allowed to run down with the throttle open.

The method may comprise running the engine at a speed greater than an idle speed, e.g. a normal idle speed, of the engine prior to performing step c). The method may comprise increasing the idle speed of the engine prior to performing step c) or increasing the running speed of the engine above the idle speed prior to performing step c).

The engine assembly may comprise a compression ignition engine. If it is determined that the likelihood of condensation is below a second threshold value, the selected engine shut down procedure may comprise closing an inlet throttle of the engine assembly, prior to reducing the amount of fuel supplied to the engine cylinders, e.g. prior to cutting fuel to the engine cylinders. The second threshold value may be equal to the first threshold value or may be different.

The method may comprise determining, e.g. measuring or predicting, an environmental property of the engine. The likelihood of formation of condensation within the cylinders after the engine has been shut down may be determined according to the environmental property of the engine.

The environmental property may comprise one or more selected from a temperature and a humidity of the engine assembly. The temperature may be an engine coolant temperature, an engine housing temperature, such as an engine cylinder head temperature, an engine exhaust temperature and/or an engine inlet temperature. The humidity may be a humidity of inlet air within the engine, e.g. within an intake manifold and/or a cylinder of the engine.

The method may comprise determining a current engine run time, e.g. a time since the engine was last started. The likelihood of formation of condensation within the cylinders after the engine has been shut down may be determined according to the current engine running time. For example, if the engine run time is above a threshold time, it may be determined that the likelihood of formation of condensation is low, e.g. below the first and/or second thresholds.

The method may comprise determining a time since a previous engine shut down. The likelihood of formation of condensation within the cylinders after the engine has been shut down may be determined according to the time since the previous engine shut down. For example, if the engine was recently shut down, e.g. the time since the previous engine shut down is below a threshold time, it may be determined that the likelihood of condensation is low.

The method may comprise determining an engine running time of a previous engine run event. The likelihood of formation of condensation within the cylinders after the engine has been shut down may be determined according to the engine running time of the previous engine run event.

According to another aspect of the present disclosure, there is provided an engine assembly comprising:
an internal combustion engine;
an exhaust gas recirculation system having a valve for controlling the flow of exhaust gases through the exhaust gas recirculation system; and
a controller configured to perform the above-mentioned method.

The internal combustion engine may be a compression ignition engine.

A motor vehicle may comprise the above mentioned engine assembly.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention.

### Brief Description of the Drawings

For a better understanding of the present invention, and to show more clearly how it may be carried into effect, reference will now be made, by way of example, to the accompanying drawings, in which:
Figure 1 is a schematic view of an engine assembly;
Figure 2 is a flow chart depicting a method of shutting down an engine assembly;
Figure 3 is a flow chart depicting another method of shutting down an engine assembly; and
Figure 4 is a flow chart depicting a method of operating an engine assembly.

### Detailed Description

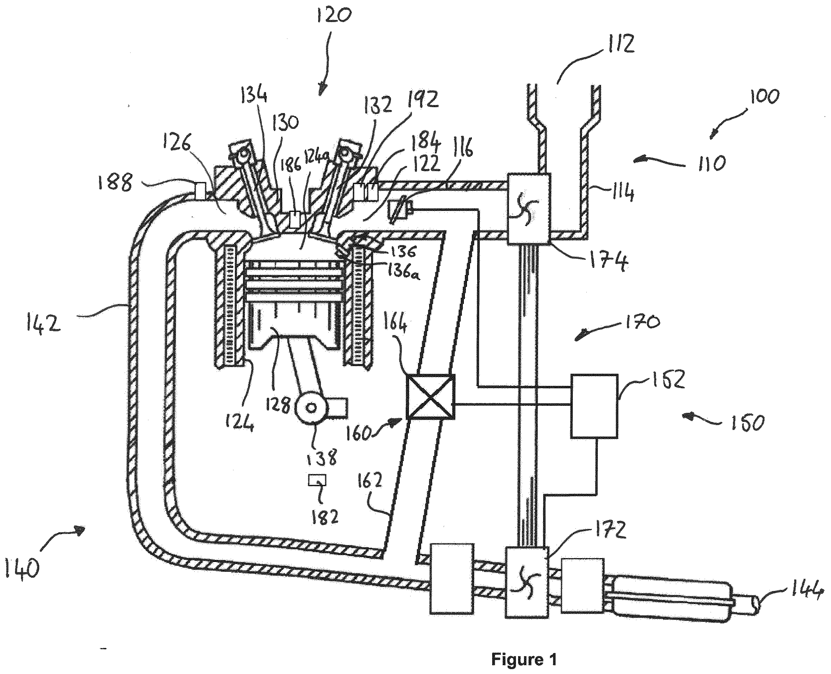

With reference to Figure 1, an engine assembly 100, e.g. for a motor vehicle, comprises an intake system 110, an internal combustion engine 120, an exhaust system 140 and a control system 150 configured to control the operation of the engine assembly 100.

In some arrangements, the motor vehicle may be a hybrid vehicle and the engine assembly 100 may be provided as part of a hybrid drive system of the hybrid vehicle. The hybrid drive system may further comprise one or more electric motors or other drive devices that can be controlled to provide power to drive the hybrid vehicle in addition, or as an alternative, to the engine assembly 100.

The intake system 110 comprises an air inlet 112 and an intake duct 114. During operation of the engine 120, air is drawn into the intake system 110 via the air inlet 112 and carried to an intake manifold 122 of the engine 120 by the intake duct 114. The intake system 110 comprises a throttle 116 configured to control a flow of inlet air between the air inlet 112 and the intake manifold 122. The position of the throttle 116 may be controlled indirectly, e.g. by a controller receiving an input from an acceleration control.

The engine 120 comprises the intake manifold 122, a cylinder 124 and an exhaust manifold 126. A piston 128 is provided within the cylinder 124 and is configured to reciprocate within the cylinder 124 during a combustion cycle of the engine 120. A combustion chamber 124a of the cylinder 124 is defined by one side of the piston 128, the walls of the cylinder 124 and a cylinder head 130.

The engine 120 further comprises one or more inlet valves 132 and one or more exhaust valves 134 to control the flow of inlet and exhaust gases into and out of the cylinder 124 respectively.

During an intake stroke, the piston 128 moves within the cylinder 124 to increase the volume of the combustion chamber 124a, drawing inlet gases from the intake manifold 122 into the cylinder via the inlet valves 132. Following the intake stroke, the inlet valve 132 is closed and the gases within the cylinder 124 are compressed as the piston 128 moves back towards the cylinder head 130, reducing the volume of the combustion chamber 124a.

Fuel is injected into the cylinder 124 via one or more fuel injectors 136. The fuel injectors comprise fuel injection nozzles 136a arranged at least partially within or adjacent to the cylinders, e.g. aligned with or recessed within the wall of the cylinder. The nozzles 136a have apertures that are accurately sized in order to allow a measured quantity of fuel to be injected into the cylinder 124 for each combustion event.

The air and fuel mixture within the cylinder 124 is ignited by virtue of the high pressure and temperature within the combustion chamber 124a. Combustion of the air and fuel mixture produces expanding combustion gases that act against the piston 128 to drive a crank shaft 138 of the engine 120.

In the arrangement depicted in Figure 1, the engine 120 is a compression ignition engine. However, it is equally envisaged that the present disclosure may apply to any other type of engine, such as a spark ignition engine in which the fuel-air mixture within the cylinder 124 is ignited by a spark plug. Furthermore, although a single cylinder 124 is shown in Figure 1, the engine 120 may comprise any number of cylinders, such as 2, 3, 4, 6, 8 or more than 8 cylinders.

During an exhaust stroke of the piston 128, exhaust gases produced through the combustion within the cylinder are exhausted from the cylinder 124 into the exhaust manifold 126 via the exhaust valve 134.

An exhaust duct 142 of the exhaust system 140 is arranged to carry the exhaust gases from the exhaust manifold 126 to an exhaust outlet 144 to be emitted from the vehicle.

As depicted in Figure 1, the engine assembly 100 may further comprise a turbocharger 170 including an exhaust driven turbine 172 arranged in the exhaust duct 142 and a compressor 174 arranged in the intake duct 114. The turbine 172 and the compressor 174 are coupled to the same shaft so that the compressor 174 can be driven by the turbine 172 to increase the pressure of inlet gases entering the intake manifold 122.

The engine assembly 100 further comprises an Exhaust Gas Recirculation (EGR) system 160. The EGR system 160 comprises an EGR duct 162 configured to recirculate a portion of the exhaust gases to the intake system 110 of the engine assembly 100, e.g. to the intake duct 114 or to the intake manifold 122. The EGR system 160 further comprises an EGR valve 164 configured to control the flow of exhaust gases through the EGR duct 162.

Replacing a portion of the oxygen rich inlet air within the engine cylinder 124 with burnt exhaust gases reduces the volume of the combustion chamber 124a that is available for combustion. This reduces the peak temperature of combustion, thereby reducing the formation of NOx.

In the arrangement shown, the EGR system 160 is a high pressure exhaust gas recirculation system configured to recirculate exhaust gases from a position upstream of the turbine 172 to a position downstream of the compressor 174 with respect to the flow of inlet air within the intake system 110. However, in other arrangements, the engine assembly 100 may additionally or alternatively comprise a low pressure exhaust gas recirculation system configured to recirculate exhaust gases from a position downstream of the turbine 172 to a position upstream of the compressor 174.

The use of exhaust gas recirculation has become increasingly popular as a way of reducing the formation, and hence, the emission of NO_{X} from motor vehicles. In some arrangements, exhaust gas recirculation may be used at substantially all running conditions of the engine 120.

If the engine is shut down using a "soft-stop" shut down procedure, such as the procedure mentioned above, whilst recirculated exhaust gases are present within the intake manifold 122 and/or the cylinder 124, an increased quantity of exhaust gases can remain within the cylinder 124 of the engine 120 after the engine has stopped. Exhaust gases that remain in the cylinders 124 following engine shut down can form corrosive condensates on the fuel injector nozzles 136a that can corrode the nozzles and thereby affect the sizes of the nozzle apertures. The use of soft-stop shut down procedures together with increased use of exhaust gas recirculation can therefore lead to increased corrosion of injector nozzles, which may necessitate early replacement of the injector nozzles 136a.

The control system 150 of the engine assembly 100 comprises a controller 152, such as an engine control unit or power train control unit. The controller 152 may be configured to control the operation of the inlet throttle 116, the EGR valve 164 and/or the turbocharger turbine 172, in order to control the power being provided by the engine.

Additionally, the controller 152, or another controller, is configured to perform a shut down procedure of the engine assembly 100 when it is determined that the engine should be shut down. For example, it may be determined that the engine should be shut down based on a control input from the driver, e.g. using an ignition key or switch. Alternatively, the controller 152, or another controller, may determine that the engine should be shut down as part of a stop-start event, or in order to transition to a period of electric only operation, e.g. during which the vehicle is driven by an electric motor provided on the vehicle.

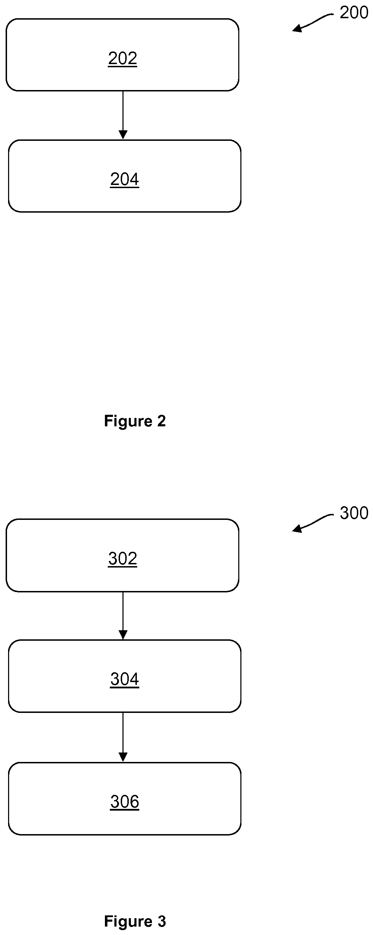

With reference to Figure 2, the controller 152 may be configured to shut down the engine 120 of the motor vehicle using a soft stop method 200. The method 200 comprises a first step 202 in which the EGR valve 164 is closed. The method further comprises a second step 204, in which the inlet throttle 116 is closed in order to restrict the flow of inlet air from the inlet 112 to the intake manifold 122. In some arrangements, the inlet throttle 116 may substantially seal the intake manifold 122, e.g. from the inlet 112.

By closing the inlet throttle 116, the pressure within the intake manifold 122 begins to decrease, due to gases being drawn from the intake manifold 122 into the engine cylinders 124.

After a period of running of the engine 120 following the inlet throttle 116 being closed, the engine stalls due to the lack of air within the intake manifold 122. As described above, because the pressure within the intake manifold is low when the engine stops running, the magnitude of vibrations generated as the engine stops are reduced, compared to if the engine was stopped whilst the intake manifold was at atmospheric pressure.

Shutting down the engine using the soft-stop method 200 may lead to corrosive condensates forming on the fuel injector nozzle 136a even if the EGR valve 164 is closed prior to shutting the inlet valve. As described above, corrosive condensates forming on the fuel injector nozzle 136a may cause corrosion of the fuel injector nozzle.

With reference to Figure 3, in order to reduce the risk of corrosion of the fuel injector nozzles, the controller 152 may be configured to shut down the engine 120 using an engine shut down method 300. The steps of the method 300 may be performed in order.

The engine shut down method 300 comprises a first step 302, in which the EGR valve 164 is closed. Closing the EGR valve reduces the rate recirculation of exhaust gases to the intake manifold 122 and therefore reduces the flow of exhaust gases into the cylinder 124 from the intake manifold 122.

The method 300 further comprises a second step 304, in which the inlet throttle 116 is maintained in an open position for a period of time.

The period of time may be selected in order to enable sufficient inlet air to be drawn into the intake manifold 122 through the inlet throttle 116 to replace any exhaust gases that may be present within the intake manifold 122 and intake duct 114, e.g. from before the EGR valve 164 was closed in the first step 302. For example, the period of time may be greater than or equal to 500ms.

The period of time may be determined based on the position of the EGR valve 164 and/or the quantity of EGR gases expected to be within the intake manifold prior to the method 300 being performed. For example, if the EGR valve 164 is in a fully open position, the period of time may be longer than if the EGR valve is in a partial open position prior to the method 300 being performed. Alternatively, the period of time may be a predetermined period of time that does not vary based on current operating conditions of the engine assembly 100.

It may be undesirable for the period of time to be so long that the driver is aware of a delay between requesting that the engine is shut down, e.g. by turning an ignition key, and the engine stopping. Hence, the period of time may selected to be less than or equal to 1000ms. In one arrangement, the period of time is a predetermined period of 700ms.

The method 300 further comprises a third step 306, in which the supply of fuel to the engine 120, e.g. to the cylinders 124 of the engine, is cut. The supply of fuel may be cut substantially instantaneously, e.g. reduced to no fuel being injected as quickly as possible. In other words, the supply of fuel may be stopped without being ramped down gradually.

The throttle 116 may be maintained in the open position whilst the fuel is cut. Additionally, the throttle 116 may be maintained in the open position whilst the engine runs down following the fuel supply being cut. In this way, clean air may be drawn through the intake manifold 122 and the cylinder 124 as the engine runs down, which may displace burnt exhaust gases from the cylinder 124.

The number of rotations performed by the engine, and hence, the number of intake stokes performed by the piston 128 may depend on the speed at which the engine was running prior to the fuel being cut. For example, if the engine is running at an idle speed of approximately 850 to 900 RPM prior to the fuel being cut, the engine 120, e.g. the crank shaft 138 of the engine, may perform 2 or 3 full rotations after the fuel is cut. Hence, each piston 128 of the engine may perform between 1 and 2 intake strokes, in which clean air is draw into the corresponding cylinder 124.

In some arrangements, in order to increase the number of rotations performed by the engine 120 following the fuel being cut, the engine 120 may be run at a speed greater than a normal idle speed of the engine prior to the fuel being cut in the third step 306. For example, the idle speed of the engine may be increased, or the engine may be run at a speed greater than idle speed prior to the fuel being cut.

When the engine is shut down in this way, the amount of exhaust gases present in the cylinder 124 when the engine has stopped may be reduced compared to when the engine is stopped using the soft-stop method 200. Hence, the formation of corrosive condensates on the fuel injector nozzles 136a and the risk of corrosion of the fuel injector nozzles may be reduced.

However, because the pressure within the intake manifold 122 is substantially equal to atmospheric pressure when the engine is stopped, the forces generated when the engine comes to a stop have a greater magnitude than the forces generated during the soft-stop procedure 200 and the vibrations produced during engine shut down are correspondingly greater.

It is therefore desirable to balance the benefits of reducing corrosion of the fuel nozzles 136a with the increase in vibrations caused during the engine shutdown method 300. Because vibrations of the engine assembly 100 during shut down may be noticeable to a driver of the vehicle, and may give the impression that the engine or vibration damping system is not operating correctly, it may be desirable to shut down the engine using the shut down method 300 only if the formation of corrosive condensates is likely.

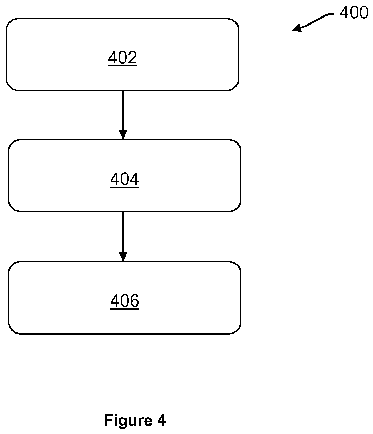

With reference to Figure 4, the controller 152, or another controller, is configured to select whether to shut down the engine 120 using for example the soft-stop procedure 200 or the engine shut down method 300 using a method 400.

The method 400 comprises a first step 402, in which it is determined whether the engine should be shut down. For example, it may be determined that the engine should be shut down based on a control input from the driver, e.g. using an ignition key or switch. Alternatively, the controller 152, or another controller, may determine that the engine should be shut down as part of a stop-start event, or in order to transition to a period of electric-only operation.

The method 400 comprises a second step 404, in which the likelihood of the formation of condensation within the cylinders after the engine has been shut down, e.g. if exhaust gases remain within the cylinders following the engine shut down, is determined. For example, it may be determined whether the likelihood of formation of condensates is above, below or equal to a threshold value.

The likelihood of formation of condensation may be determined based on an environmental condition of the engine assembly 100, such as a temperature of the engine cylinder and/or a temperature or humidity of gases within the cylinder. Additionally or alternatively, the likelihood of formation of condensation may be determined based on one or more engine running or shut down times relating to the engine assembly, as described below.

Returning to Figure 1, the engine assembly 100 may comprise one or more temperature sensors, such as an engine coolant temperature sensor 182, an intake manifold temperature sensor 184, a cylinder head temperature sensor 186, an exhaust temperature sensor 188, or any other engine assembly temperature sensor. Additionally or alternatively, the engine assembly 100 may comprise one or more humidity sensors, such as an intake manifold humidity sensor 192 or any other engine assembly humidity sensor.

The controller 152 may receive measurements from the temperature sensors 182, 184, 186, 188 and/or the humidity sensors 192 and may be configured to determine the likelihood of the formation of condensation within the cylinders after the engine has been shut down, e.g. during the second step 404 of the method 400, using the measurements.

Additionally or alternatively, the controller 152 may be configured to determine the likelihood of the formation of condensation within the cylinders after the engine has been shut down based on a current engine run time, e.g. how long the engine has been running since it was last started. For example, if the current engine run time is above a threshold time, it may be determined that the likelihood of the formation of condensation is low, e.g. below the threshold value. Additionally or alternatively, the current engine run time may be used to determine a predicted temperature of the engine assembly, the predicted temperature may be used to determine the likelihood of formation of condensation, e.g. in the same way as the measurements from the temperature sensors 182, 184, 186, 188.

The controller 152 may be configured to determine a previous engine run time, e.g. the time the engine spent running during a previous period of operation of the engine assembly 100. The controller 152 may be configured to determine a predicted temperature of the engine assembly 100 at the time that the engine was previously shut down based on the previous engine run time. Additionally or alternatively, the controller 152 may be configured to store measurements from the engine assembly temperature and/or humidity sensors relating to the previous period of operation, e.g. in a memory associated with the controller 152.

The controller 152 may be configured to determine a time since the engine was previously shut down. The likelihood of the formation of condensation within the cylinders may be determined based on the time since the engine was previously shut down. For example, the controller 152 may determine how long the engine was not running, e.g. between the previous engine shut down and a recent engine start, and may determine a temperature of the engine assembly at least partially based on the time the engine was not running. The temperature of the engine assembly may additionally be determined based on the stored or predicted temperature of the engine assembly at the time that the engine was shut down, e.g. together with the current engine run time.

In general, the controller 152 may be configured to consider engine run times and times the engine spent shut down for a number of prior periods of operation of the engine, in order to determine the likelihood of the formation of condensation. For example, the controller 152 may calculate the total amount of time the engine spent running and/or the total amount of time the engine spent shut down over a period of time, such as 30 minutes, 1 hour, 2 hours or any other desirable period of time, prior to the engine shut down about to be performed, and may determine the likelihood of formation of condensation based on the calculated total times.

The method 400 further comprises a third step 406, in which an engine shut down procedure is selected based on the likelihood of formation of condensation. For example, if the likelihood of formation of condensation is equal to or below the threshold value, the soft-stop engine shut down method 200 may be selected.

If the likelihood of condensation is above the threshold value, or a further threshold value, the engine shut down method 300 is selected.

It will be appreciated by those skilled in the art that although the invention has been described by way of example, with reference to one or more exemplary examples, it is not limited to the disclosed examples and that alternative examples could be constructed without departing from the scope of the invention as defined by the appended claims

## Claims

1. A method of operating an engine assembly, the engine assembly comprising an exhaust gas recirculation system having a valve for controlling the flow of exhaust gases through the exhaust gas recirculation system, the method comprising:
determining that the engine should be shut down;
determining a likelihood of the formation of condensation within cylinders of the engine assembly after the engine has been shut down;
selecting an engine shut down procedure based on the likelihood of formation of condensation, wherein if it is determined that the likelihood of condensation is above a first threshold value, the selected engine shut down procedure comprises:
a) closing the valve of the exhaust gas recirculation system;
b) maintaining an inlet throttle of the engine assembly in an open position for a period of time;
c) cutting the supply of fuel to the engine following the period of time whilst the inlet throttle is in the open position; and
if it is determined that the likelihood of condensation is below a second threshold value, the engine shut down procedure is selected in order to minimise vibrations of the engine during the engine shut down; and
performing the engine shut down procedure to shut down the engine.

2. The method of claim 1, wherein the supply of fuel to the engine is cut without ramping down gradually in step c).

3. The method of claim 1 or 2, wherein the period of time is greater than or equal to 500ms and less than or equal to 1000ms.

4. The method of any of claims 1 to 3, wherein the throttle is maintained in the open position during and after step c) until the engine as stopped.

5. The method of any of claims 1 to 4, wherein the method comprises running the engine at a speed greater than an idle speed of the engine prior to performing step c).

6. The method of any of claims 1 to 5, wherein the method comprises, determining an environmental property of the engine, wherein the likelihood of formation of condensation within the cylinders after the engine has been shut down is determined according to the environmental property of the engine.

7. The method of claim 6, wherein the environmental property comprises one or more selected from a temperature and a humidity of the engine assembly.

8. The method of any of claims 1 to 7, wherein the method comprises determining a current engine run time, wherein the likelihood of formation of condensation within the cylinders after the engine has been shut down is determined according to the current engine running time.

9. The method of any of claims 1 to 8, wherein the method comprises determining a time since a previous engine shut down, wherein the likelihood of formation of condensation within the cylinders after the engine has been shut down is determined according to the time since the previous engine shut down.

10. The method of any of claims 1 to 9, wherein the method comprises determining an engine running time of a previous engine run event, wherein the likelihood of formation of condensation within the cylinders after the engine has been shut down is determined according to the engine running time of the previous engine run event.

11. An engine assembly comprising:
an internal combustion engine;
an exhaust gas recirculation system having a valve for controlling the flow of exhaust gases through the exhaust gas recirculation system; and
a controller configured to perform the method according to claim 1 or 10.

12. A motor vehicle comprising the engine assembly of claim 11.

## Patentansprüche

1. Verfahren zum Betreiben einer Motoranordnung, die Motoranordnung umfassend ein Abgasrückführungssystem, das ein Ventil zum Steuern des Stroms von Abgasen durch das Abgasrückführungssystem, das Verfahren umfassend:
Bestimmen, dass der Motor abgeschaltet werden soll;
Bestimmen einer Wahrscheinlichkeit für die Bildung von Kondensation in Zylindern der Motoranordnung, nachdem der Motor abgeschaltet worden ist;
Auswählen eines Motorabschaltverfahrens basierend auf der Wahrscheinlichkeit einer Bildung von Kondensation, wobei, wenn bestimmt wird, dass die Wahrscheinlichkeit von Kondensation über einem ersten Schwellenwert ist, das ausgewählte Motorabschaltverfahren Folgendes umfasst:
a) Schließen des Ventils des Abgasrückführungssystems;
b) Halten einer Einlassdrossel der Motoranordnung in einer offenen Position für eine Zeitperiode;
c) Unterbrechen der Kraftstoffzufuhr zu dem Motor nach der Zeitperiode, während die Einlassdrosselklappe in der offenen Position ist; und
wenn bestimmt wird, dass die Kondensationswahrscheinlichkeit unter einem zweiten Schwellenwert ist, wird das Motorabschaltverfahren ausgewählt, um Vibrationen des Motors während der Motorabschaltung zu minimieren; und
Ausführen des Motorabschaltverfahrens, um den Motor abzuschalten.

2. Verfahren gemäß Anspruch 1, wobei die Kraftstoffzufuhr zu dem Motor in Schritt c) ohne stufenweises Herunterfahren unterbrochen wird.

3. Verfahren gemäß Anspruch 1 oder 2, wobei die Zeitperiode größer als oder gleich wie 500 ms und kleiner als oder gleich wie 1000 ms ist.

4. Verfahren gemäß einem der Ansprüche 1 bis 3, wobei die Drosselklappe während und nach Schritt c) in der offenen Position gehalten wird, bis der Motor abgeschaltet ist.

5. Verfahren gemäß einem der Ansprüche 1 bis 4, wobei das Verfahren ein Laufen des Motors mit einer Drehzahl umfasst, die größer ist als eine Leerlaufdrehzahl des Motors vor Ausführen von Schritt c).

6. Verfahren gemäß einem der Ansprüche 1 bis 5, wobei das Verfahren ein Bestimmen einer Umgebungseigenschaft des Motors umfasst, wobei die Wahrscheinlichkeit einer Bildung von Kondensation in den Zylindern, nachdem der Motor abgestellt worden ist, entsprechend der Umgebungseigenschaft des Motors bestimmt wird.

7. Verfahren gemäß Anspruch 6, wobei die Umgebungseigenschaft eine oder mehrere ausgewählt aus einer Temperatur und einer Feuchtigkeit der Motoranordnung umfasst.

8. Verfahren gemäß einem der Ansprüche 1 bis 7, wobei das Verfahren ein Bestimmen einer aktuellen Motorlaufzeit umfasst, wobei die Wahrscheinlichkeit einer Bildung von Kondensation in den Zylindern, nachdem der Motor abgeschaltet worden ist, entsprechend der aktuellen Motorlaufzeit bestimmt wird.

9. Verfahren gemäß einem der Ansprüche 1 bis 8, wobei das Verfahren ein Bestimmen einer Zeit seit einer vorherigen Motorabschaltung umfasst, wobei die Wahrscheinlichkeit einer Bildung von Kondensation in den Zylindern, nachdem der Motor abgeschaltet worden ist, entsprechend der Zeit seit der vorherigen Motorabschaltung bestimmt wird.

10. Verfahren gemäß einem der Ansprüche 1 bis 9, wobei das Verfahren ein Bestimmen einer Motorlaufzeit eines vorherigen Motorlaufereignisses umfasst, wobei die Wahrscheinlichkeit einer Bildung von Kondensation in den Zylindern, nachdem der Motor abgeschaltet worden ist, gemäß der Motorlaufzeit des vorherigen Motorlaufereignisses bestimmt wird.

11. Motoranordnung, umfassend:
einen Verbrennungsmotor;
ein Abgasrückführungssystem, das ein Ventil zum Steuern des Abgasstroms durch das Abgasrückführungssystem aufweist; und
eine Steuerung, die konfiguriert ist, um das Verfahren gemäß Anspruch 1 oder 10 auszuführen.

12. Kraftfahrzeug, umfassend die Motoranordnung gemäß Anspruch 11.

## Revendications

1. Procédé d'utilisation d'un ensemble moteur, l'ensemble moteur comprenant un système de recirculation des gaz d'échappement doté d'une vanne destinée à réguler le flux des gaz d'échappement à travers le système de recirculation des gaz d'échappement, le procédé comprenant :
la détermination si le moteur doit être arrêté ;
la détermination de la probabilité de formation de condensation à l'intérieur des cylindres de l'ensemble moteur après l'arrêt du moteur ;
la sélection d'une procédure d'arrêt du moteur basée sur la probabilité de formation de condensation, dans lequel, s'il a été établi que la probabilité de condensation est supérieure à une première valeur seuil, la procédure d'arrêt du moteur sélectionnée comprend :
a) la fermeture de la vanne du système de recirculation des gaz d'échappement ;
b) le maintien d'un papillon d'admission de l'ensemble moteur en position ouverte pendant un certain temps ;
c) la coupure de l'alimentation en carburant du moteur après la période pendant laquelle le papillon d'admission est en position ouverte ; et
s'il a été établi que la probabilité de condensation est inférieure à une seconde valeur seuil, la procédure d'arrêt du moteur est sélectionnée afin de minimiser les vibrations du moteur pendant l'arrêt du moteur ; et
la réalisation de la procédure d'arrêt du moteur pour arrêter le moteur.

2. Procédé selon la revendication 1, dans lequel l'alimentation en carburant du moteur est coupée sans s'abaisser de manière progressive à l'étape c).

3. Procédé selon la revendication 1 ou 2, dans lequel la période est supérieure ou égale à 500 ms et inférieure ou égale à 1 000 ms.

4. Procédé selon l'une quelconque des revendications 1 à 3, dans lequel l'accélérateur est maintenu en position ouverte pendant et après l'étape c) jusqu'à l'arrêt du moteur.

5. Procédé selon l'une quelconque des revendications 1 à 4, dans lequel le procédé comprend le fonctionnement du moteur à un régime supérieur à un régime de ralenti du moteur avant de réaliser l'étape c).

6. Procédé selon l'une quelconque des revendications 1 à 5, dans lequel le procédé comprend la détermination d'une propriété environnementale du moteur, dans lequel la probabilité de formation de condensation dans les cylindres après l'arrêt du moteur est déterminée en fonction de la propriété environnementale du moteur.

7. Procédé selon la revendication 6, dans lequel la propriété environnementale comprend un ou plusieurs éléments sélectionnés parmi une température et une humidité de l'ensemble moteur.

8. Procédé selon l'une quelconque des revendications 1 à 7, dans lequel le procédé comprend la détermination d'un temps de fonctionnement actuel du moteur, dans lequel la probabilité de formation de condensation dans les cylindres après l'arrêt du moteur est déterminée en fonction du temps de fonctionnement actuel du moteur.

9. Procédé selon l'une quelconque des revendications 1 à 8, dans lequel le procédé comprend la détermination d'un temps depuis l'arrêt du moteur précédent, dans lequel la probabilité de formation de condensation dans les cylindres après l'arrêt du moteur est déterminée en fonction du temps depuis l'arrêt du moteur précédent.

10. Procédé selon l'une quelconque des revendications 1 à 9, dans lequel le procédé comprend la détermination d'un temps de fonctionnement du moteur d'un événement précédent de fonctionnement du moteur, dans lequel la probabilité de formation de condensation dans les cylindres après l'arrêt du moteur est déterminée en fonction du temps de fonctionnement du moteur de l'événement précédent de fonctionnement du moteur.

11. Ensemble moteur comprenant :
un moteur à combustion interne ;
un système de recirculation des gaz d'échappement doté d'une vanne destinée à réguler le flux des gaz d'échappement à travers le système de recirculation des gaz d'échappement ; et
un dispositif de commande configuré pour réaliser le procédé selon la revendication 1 ou 10.

12. Véhicule à moteur comprenant l'ensemble moteur selon la revendication 11
